# EUROPEAN PATENT SPECIFICATION

(11) **EP 2 678 509 B1**
(45) Date of publication and mention of the grant of the patent: **15.02.2017**
(21) Application number: 11847395.8
(22) Date of filing: 09.12.2011
(51) Int. Cl.: E06B 3/96, E06B 3/964, E06B 3/968, F16B 7/00, E06B 7/082, E06B 7/086, E04F 10/08, E06B 9/02, E04H 17/14, E04F 11/18

(54) **FRAME CONNECTION**
RAHMENVERBINDUNG
JOINT DE CADRE

(30) Priority: 10.12.2010 AU 2010905422; 07.01.2011 AU 2011900045
(43) Date of publication of application: 01.01.2014
(73) Proprietor: U-Clik Barriers Pty Ltd, Trigg, WA 6029 (AU)
(72) Inventor: HAYTER, Darren, Western Australia 6065 (AU); KHOURY, Edward Joseph, Western Australia 6150 (AU)
(74) Representative: Beattie, Alex Thomas Stewart
(86) International application number: PCT/AU2011/001591
(87) International publication number: WO 2012/075536

(56) References cited:
- EP-A2- 1 424 464
- WO-A1-2005/011446
- GB-A- 1 158 625
- GB-A- 2 348 188
- US-A- 3 265 416
- US-A1- 2005 129 460
- US-A1- 2008 174 114

## Description

### Field of the Invention

The present invention relates to a frame connection for use in applications such as fence panels, screening panels, balustrades or railings.

### Background to the Invention

Many structures such as fence panels, screening panels, balustrades and railings comprise an external frame supporting a plurality of cross members. The members forming the frame generally comprise extrusions that are cut at 45 degrees at the ends and secured to form the frame.

A common method of joining the ends of the extrusions is to insert a single angle piece into the end of each of the extrusions and screw through the sides of the extrusions into the angle piece to hold the extrusions together. While such an arrangement is relatively simple to assemble, the corner connection can tend to become loose due to flexing of the extrusions in use. Further, this arrangement can result in visible fixings, which detracts from the appearance of the frame.

The present invention relates to a frame connection for connecting members of a frame aimed at providing simple assembly and a secure connection, without visible fixings.

EP 1 424 464 A2 discloses a frame connection comprising all the features of the preamble of claim 1.

### Summary of the Invention

According to one aspect of the present invention there is provided a frame connection comprising:
a first elongate member having first and second channels, the first channel being in a first longitudinal side of the first elongate member and the second channel being in an opposed second longitudinal side of the first elongate member;
a second elongate member having first and second channels, the first channel being in a first longitudinal side of the second elongate member and the second channel being in an opposed second longitudinal side of the second elongate member;
a first connection member having a first end portion comprising a first planar member and a second end portion comprising a second planar member, each of the first and second end portions including one or more holes therein;
a second connection member having a first end portion comprising a first planar member and a second end portion comprising a second planar member, each of the first and second end portions including one or more holes therein; and
side cover members;
wherein the first end portions of the first and second connection members are received in the first and second channels respectively of the first elongate member, the second end portions of the first and second connection members are received in the first and second channels respectively of the second elongate member, fasteners are received through the holes to secure the first and second connection members to the first and second elongate members and the side cover members are then secured across the first and second channels of the first and second elongate members and wherein the first and second elongate members are formed by parallel first and second end walls interconnected by first and second inner walls such that the first channel is defined adjacent a first side of the elongate member between the first inner wall and the first ends of the first and second end walls and the second channel is defined adjacent a second side of the elongate member between the second inner wall and the second ends of the first and second end walls.

Preferably the first and second end portions of the first and second connection members each comprise opposed parallel sides and a distal end.

Preferably the opposed parallel sides of each of the first and second end portions are provided with a plurality of protrusions thereon to engage with the inner sides of the channels such that the connection members are press fit into the channels.

In a preferred embodiment, the protrusions are constructed of a material to be deformed as the protrusions engage with inner sides of the channels. The protrusions may each comprise a triangular shaped protrusion.

The first and second channels of the elongate members are preferably of complementary shape to the first and second end portions of the connection members such that in cross section the length of the channels between the first and second end walls is relatively large compared to the width.

Preferably, each of the first and second side walls is provided with longitudinal slots along the edges thereof such that the slots can receive complementary ribs provided on the side cover members to allow the side cover members to be press fit across the channels.

In one embodiment, the first and second planar members are oriented in the same plane and opposed parallel sides of the first planar member are perpendicular to opposed parallel sides of the second planar member.

In a further embodiment, the first planar member of each connection member is oriented in a plane perpendicular to that of the second planar member.

In one embodiment, a connection body is provided such that the connection body connects a portion of the first connection member between the first and second ends thereof to the second connection member between the first and second ends thereof.

The side cover members may be connected by a curved top wall such that a single cover unit is provided for covering the first and second channels and extending across the first end wall. Preferably the connection body is provided with a cross sectional shape the same as that of the cover unit such that a join having a consistent cross section throughout is created.

In a further embodiment, the connection body is provided with a ball joint therein such that the angle between the first ends of the connection members can be adjusted relative to the second ends of the connection members.

In a further embodiment, the connection body is provided with third end portions extending in a direction perpendicular to both the first and second end portions, the third end portions being provided to connect to a third elongate member.

### Brief Description of the Drawings

The invention will now be described, by way of example, with reference to the following drawings, in which:
Figure 1 is an upper perspective view of a frame assembly for holding louvres using the frame connection of the present invention;
Figure 1b is an exploded view of the frame assembly of Figure 1 a;
Figure 2 is an end view of one of the elongate members of the frame assembly of Figure 1;
Figure 3 is an upper perspective view of a segment of the elongate member;
Figure 4a is a top view of one of the connection members of the frame connection;
Figure 4b is a side view of the connection member of Figure 4a;
Figure 4c is an upper perspective view of the connection member of Figure 4a;
Figure 4d is a lower perspective view of the connection member of Figure 4a;
Figure 5 is a close up view of the adjacent ends of the elongate members of Figure 1b;
Figure 6a is a top view of an end support for use with the frame assembly of Figure 1;
Figure 6b is a side view of the end support of Figure 6a;
Figure 6c is a front view of the end support of Figure 6a;
Figure 6d is an upper perspective view of the end support of Figure 6a;
Figure 6e is a lower perspective view of the end support of Figure 6a;
Figure 7a is a top view of an end support cover plate for use with the end support of Figure 6;
Figure 7b is a side view of the end support cover plate of Figure 7a;
Figure 7c is an upper perspective view of the end support cover plate of Figure 7a;
Figure 7d is a lower perspective view of the end support cover plate of Figure 7a;
Figure 8a is an upper perspective view of a fence panel incorporating the frame connection of the present invention;
Figure 8b is an exploded view of the fence panel of Figure 8a showing connection of the end supports;
Figure 9a is an upper perspective view of a second embodiment of a frame assembly incorporating the frame connection of the present invention;
Figure 9b is an exploded view of the frame assembly of Figure 9a;
Figure 10a is a top view of a connection member of the frame connection of Figure 9;
Figure 10b is a side view of the connection member of Figure 10a;
Figure 10c is a front view of the connection member of Figure 10a;
Figure 10d is an upper perspective view of the connection member of Figure 10a;
Figure 10e is a lower perspective view of the connection member of Figure 10a;
Figure 11 is a close up view of the adjacent ends of the elongate members of Figure 9b;
Figure 12a is a front view of the frame assembly of Figure 9;
Figure 12b is a side view of the frame assembly of Figure 9;
Figure 12c is a cross sectional view of the frame assembly through the line C-C;
Figure 12d is a close up of Detail D of Figure 12c;
Figure 13a is an upper perspective view of a third embodiment of a frame connection in accordance with the present invention;
Figure 13b is an exploded view of the frame connection of Figure 13a;
Figure 13c is an upper perspective view of the frame connection of Figure 13a with side cover members attached;
Figure 14a is an upper perspective view of a fourth embodiment of a frame connection in accordance with the present invention;
Figure 14b is a side view of the frame connection of Figure 14a;
Figure 14c is an upper perspective view of the frame connection of Figure 14a with side cover members attached;
Figure 14d is an exploded view of the frame connection of Figure 14a;
Figure 15a is an upper perspective view of a fence assembly connected by a fourth embodiment of a frame connection in accordance with the present invention;
Figure 15b is a close up exploded view of Detail A of Figure 15a;
Figure 16a is an upper perspective view of a fence assembly connected by a fifth embodiment of a frame connection in accordance with the present invention;
Figure 16b is a close up exploded view of Detail B of Figure 16a;
Figure 17a is an upper perspective view of a fence assembly connected by a sixth embodiment of a frame connection in accordance with the present invention; and
Figure 17b is a close up exploded view of Detail C of Figure 17a.

### Detailed Description of Preferred Embodiments

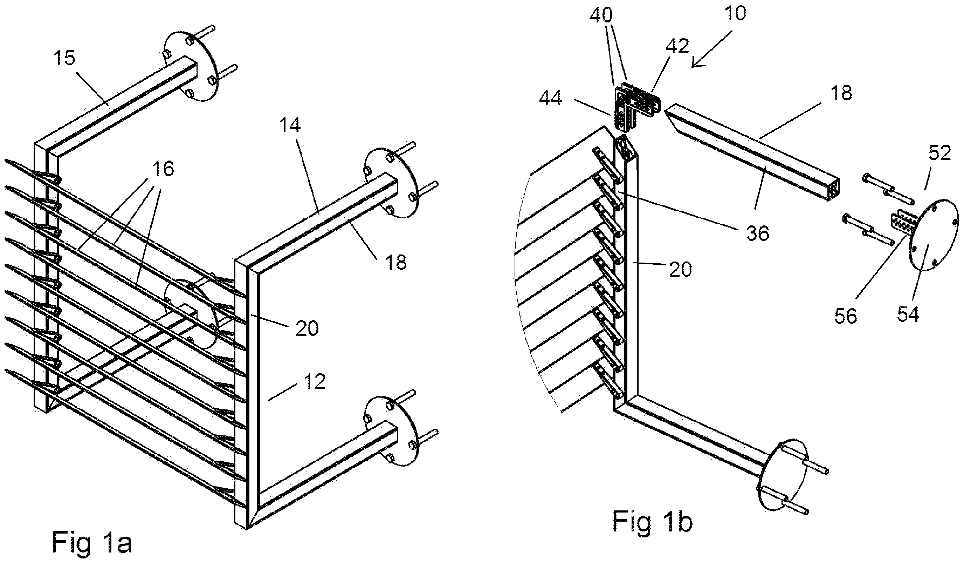

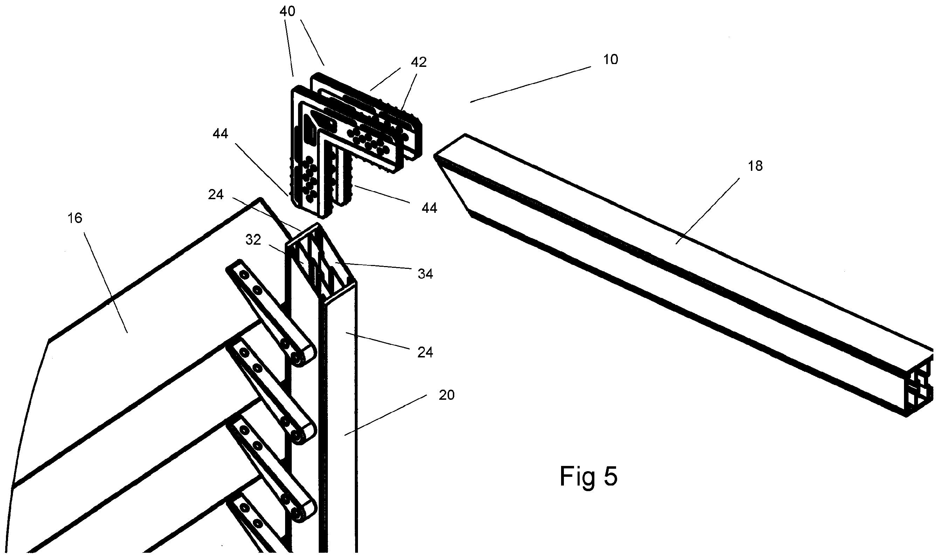

Referring to Figures, there is shown a frame connection 10 for connecting elongate members of a frame assembly 12. In the embodiment of Figures 1 to 5, the frame assembly 12 comprises a first frame portion 14 and a second frame portion 15. Each of the first and second frame portions 14 and 15 comprise a plurality of elongate members mounted to a vertical surface, such as a wall around a window. A plurality of louvre blades 16 are secured between the first frame portion 14 and the second frame portion 15.

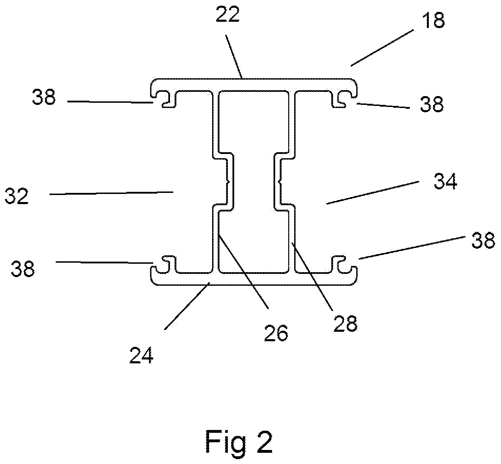

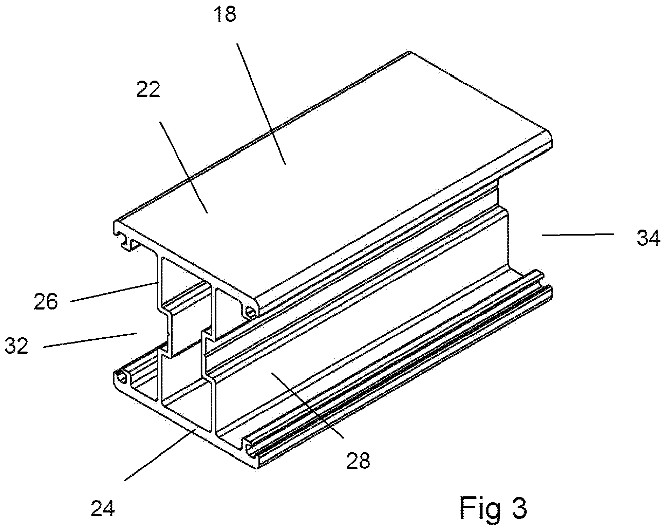

In the embodiment shown, each of the elongate members comprises an extrusion having a cross sectional shape as shown in Figures 2 and 3. The invention comprises a frame connection 10 for connecting a pair of adjacent elongate members and will be described with reference to a first elongate member 18 and a second elongate member 20, as shown in Figure 1 b.

With reference to Figures 2 and 3, each of the first and second elongate members 18 and 20 is formed by parallel first and second end walls 22 and 24. The end walls 22 and 24 are interconnected by first and second inner walls 26 and 28. The first and second inner walls 26 and 28 are each offset from the ends of the first and second end walls 22 and 24 such that longitudinal channels are defined. A first channel 32 is defined adjacent a first side of the elongate member between the first inner wall 26 and the first ends of the first and second end walls 22 and 24. A second channel 34 is defined adjacent a second side of the elongate member between the second inner wall 28 and the second ends of the first and second end walls 22 and 24.

In transverse cross section, the first and second elongate members 18 and 20 are therefore generally of an H-shape. The first and second channels 32 and 34 are closed off at the first and second sides of the elongate members by side cover members 36. Each of the first and second side walls 22 and 24 is provided with longitudinal slots 38 along the edges thereof such that these slots 38 can receive complementary ribs provided on the side cover members 36. The side cover members 36 can be press fit across the channels 32 and 34 to provide a finished appearance to the first and second elongate members 18 and 20.

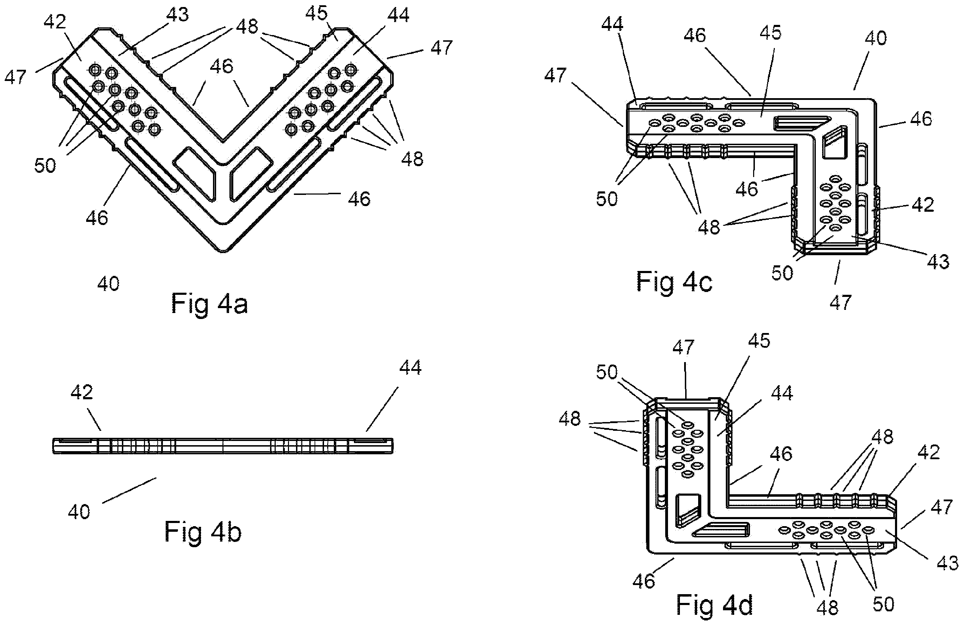

The first and second elongate members 18 and 20 are secured together at first ends thereof by a pair of connection members 40, as can be seen in Figure 4. Adjacent ends of the first and second elongate members 18 and 20 are angled such that the end of the first elongate member 18 meets the end of the second elongate member 20 in a mitred joint. In the embodiment shown in which the connection is perpendicular, the ends of the each of the elongate members 18 and 20 are cut at 45 degrees.

The connection member 40 comprises a first end portion 42 that is to be received in the first channel 32 or the second channel 34 of the first elongate member 18 and a second end portion 44 that is to be received in the corresponding channel 32 or 34 of the second elongate member 20.

The first end portion 42 comprises a first planar member 43 having opposed parallel sides 46 and a distal end 47. The second end portion 44 comprises a second planar member 45 having also parallel sides 46 and a distal end 47. The first and second planar members 43 and 45 are oriented in the same plane and opposed sides 46 of the first planar member 43 are perpendicular to opposed sides 46 of the second planar member 45. That is, the connection member 40 forms generally an L-shaped plate.

The first and second channels 32 and 34 of the elongate members 18 and 20 are of complementary shape to the first and second end portions 42 and 44 of the connection members 40. That is, in cross section the length of the channels 32 and 34 between the first and second end walls 22 and 24 is relatively large compared to the width between the inner wall 26 or 28 and the side cover member 36.

In use, the first end portion 42 of a first connection member 40 is inserted into the first channel 32 of the first elongate member 18 and the second end portion 44 of the first connection member 40 is inserted into the first channel 32 of the second elongate member 20. The first end portion 42 of a second connection member 40 is inserted into the second channel 34 of the first elongate member 18 and the second end portion 44 of the second connection member 40 is inserted into the second channel 34 of the second elongate member 20.

The opposed sides 46 of each of the first and second end portions 42 and 44 of the connection members 40 are provided with a plurality of protrusions 48 thereon. The protrusions 48 engage with the inner sides of the end walls 22 and 24 such that the connection members 40 must be press fit into the channels 32 and 34. The connection members 40 may, for example be constructed of a plastic based material with the elongate members 18 and 20 being metal extrusions. The protrusions 48 will therefore deform as they engage with the inner sides of the end walls 22 and 24. In the embodiment shown, the protrusions 48 each comprise a triangular shaped protrusion.

The connection members 40 are also provided with a plurality of holes 50 in both the first and second end portions 42 and 44 thereof. Once the connection members 40 are pressed into the channels 32 and 34, a suitable fastener such as a threaded fastener may be inserted through one or more of the holes 50 into the inner wall 26 or 28. By drilling into the inner wall 26 or 28, the threaded fastener can further securely connect the connection member 40 to the elongate member 18 or 20 before the side cover member 36 is pressed into place.

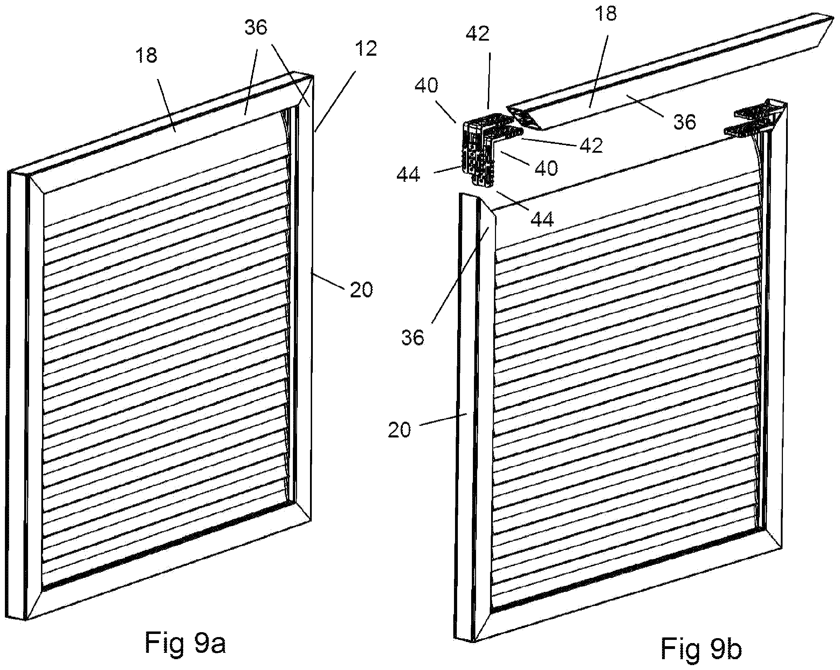

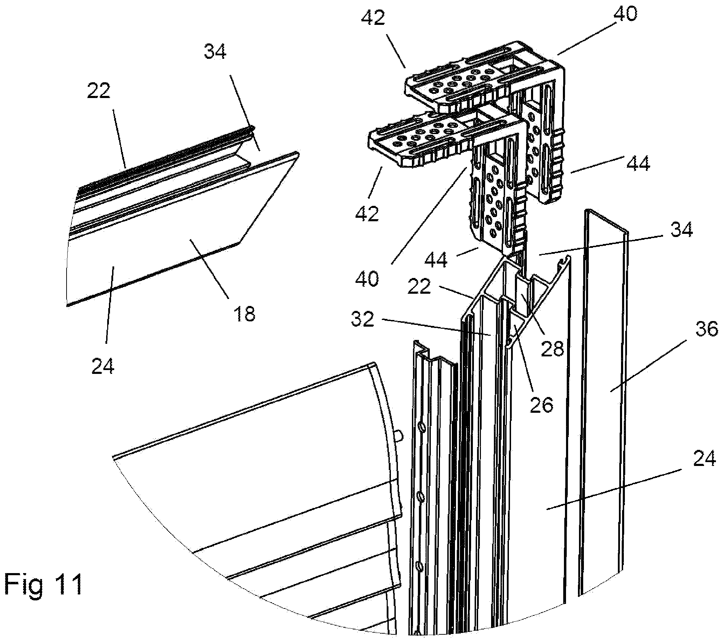

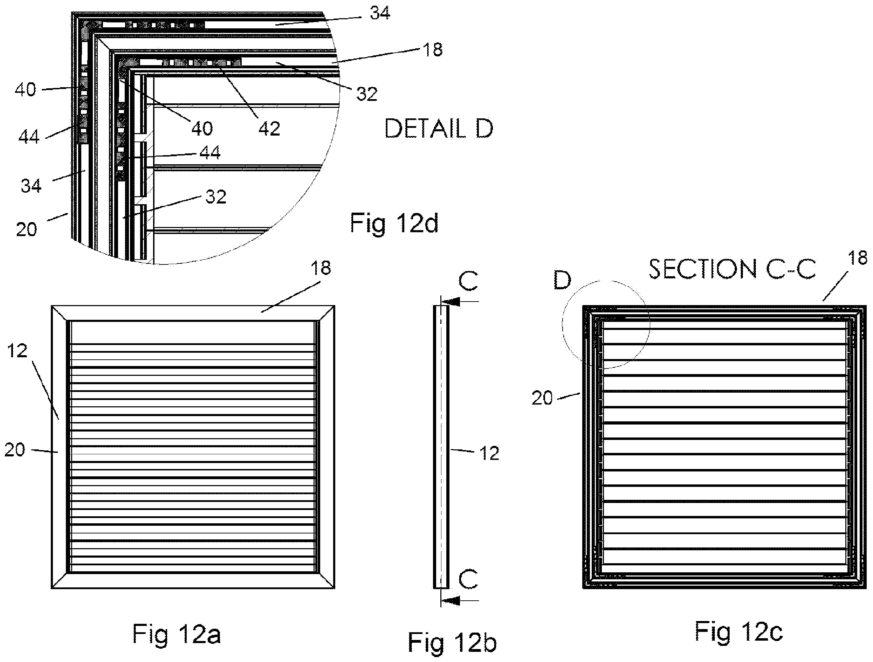

Figures 9 to 12 show a second embodiment of a frame connection 10 in accordance with the present invention and like reference numerals are used to denote like parts. In the embodiment of Figures 9 to 12, the first and second elongate members 18 and 20 have the same cross sectional shape as the first embodiment, however the connection is rotated by 90 degrees. In the first embodiment, the mitred joint between the first and second elongate members 18 and 20 is cut such that the first and second channels 32 and 34 are each on an opposite side of the plane in which the connected elongate members 18 and 20 lie. That is, if the first and second elongate member 18 and 20 were formed into a frame as shown in Figure 9, the channels 32 and 34 would be on opposite sides of the formed frame assembly. In the embodiment of Figures 9 to 12 however, the first channel 32 is on the inside of the frame assembly 12 and the second channel 34 is on the outside of the frame assembly 12.

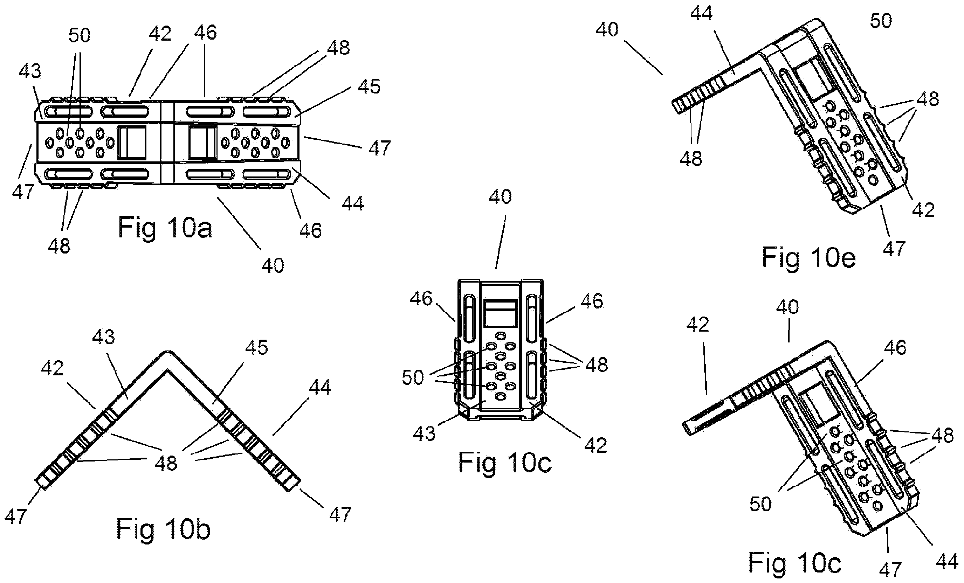

The connection members 40 of the second embodiment (as shown in Figure 10) are therefore modified in shape. While the first and second portions 42 and 44 are still connected perpendicularly to form an L-shape, the first planar member 43 of the connection member 40 is oriented in a plane perpendicular to that of the second planar member 45. Other features of the connection members 40 remain the same and the connection members 40 are used to connect together the first and second elongate members 18 and 20 in the same manner as described previously.

Also provided are end supports 52 for connecting an elongate member of the frame assembly 12 to a supporting surface, such as a wall or the ground. The end support 52 comprises a base plate 54 and a pair of planar members 56. Each of the planar members 56 are of similar constructions to the first and second planar members 43 and 45 of the connection members 40 in that each include opposed parallel sides 46 having protrusions 48 and a distal end 47. The planar members 56 however each extend parallel to each other from the base plate 56. The planar members 56 are arranged to be received in the first and second channels 32 and 34 of an elongate member that is to be connected to the supporting surface. The base plate 54 is then connected to the supporting surface by suitable means, such as threaded fasteners.

An end support cover plate 58 is also provided to fit over the base plate 56. The end support cover plate 58 includes an aperture 60 through which the elongate member is received.

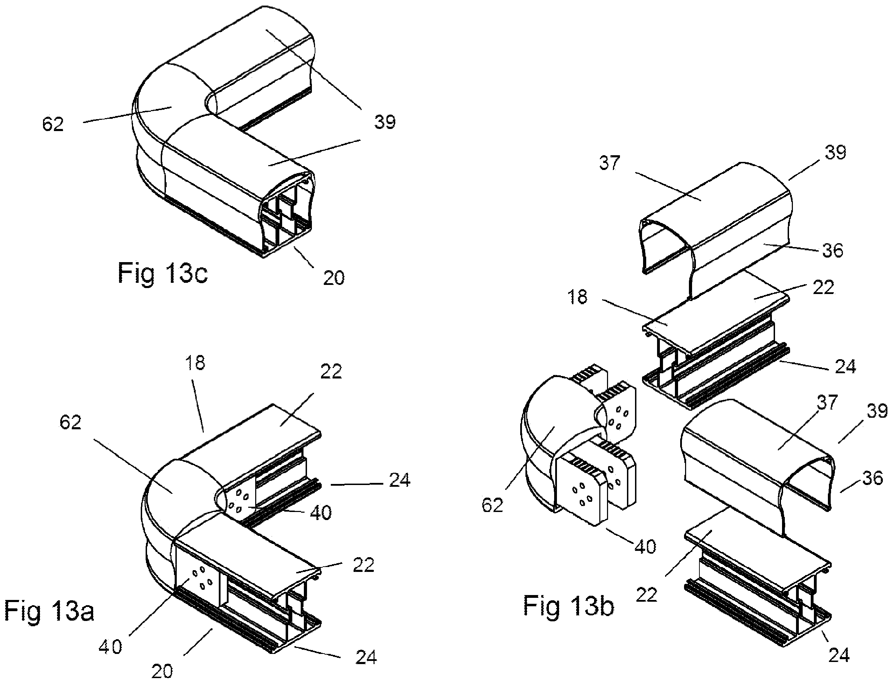

Figure 13 shows a third embodiment of a frame connection 10 in accordance with the present invention. The embodiment of Figure 13 is similar to that of the embodiment of Figure 9 and like reference numerals are used to denote like parts.

In the embodiment of Figure 13, the first and second connection members 40 are fixed together. A connection body 62 is provided such that the connection body 62 connects a portion of the first connection member 40 between the first and second ends thereof to the second connection member 40 between the first and second ends thereof.

The side cover members 36 in this embodiment are connected by a curved top wall 37 such that a single cover unit 39 is provided for covering the first and second channels 32 and 34 and extending across the first end wall 22. The connection body 62 is provided with a cross sectional shape the same as that of the cover unit 39 such that a join having a consistent cross section throughout is created. The first and second elongate members 18 and 20 of this type may be used as part of a handrail structure.

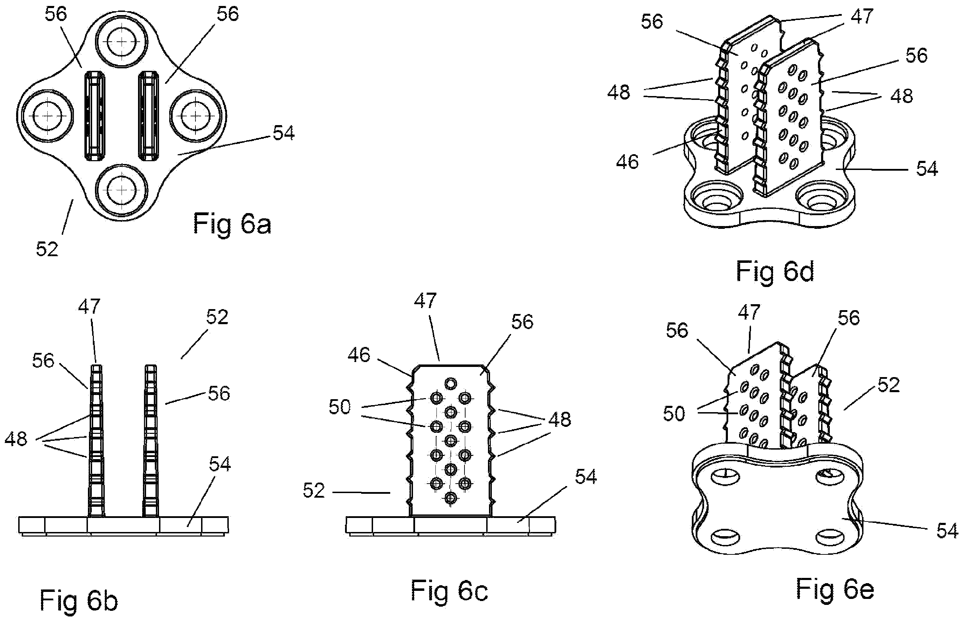

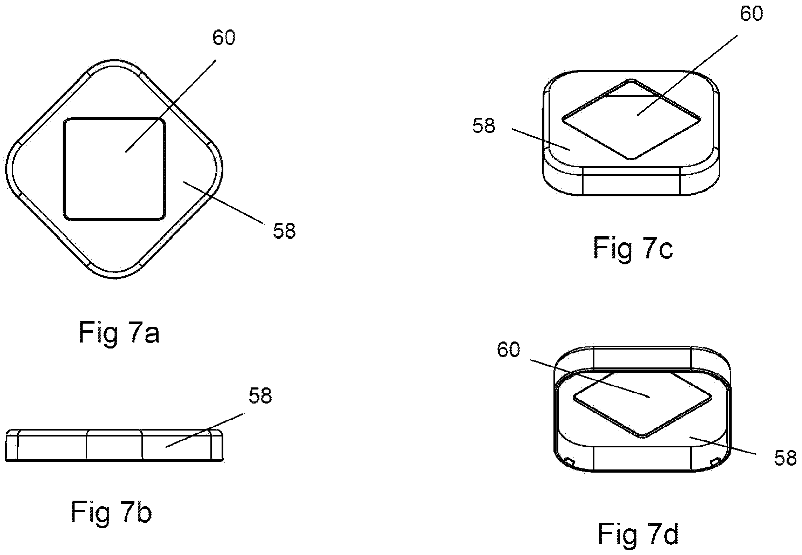

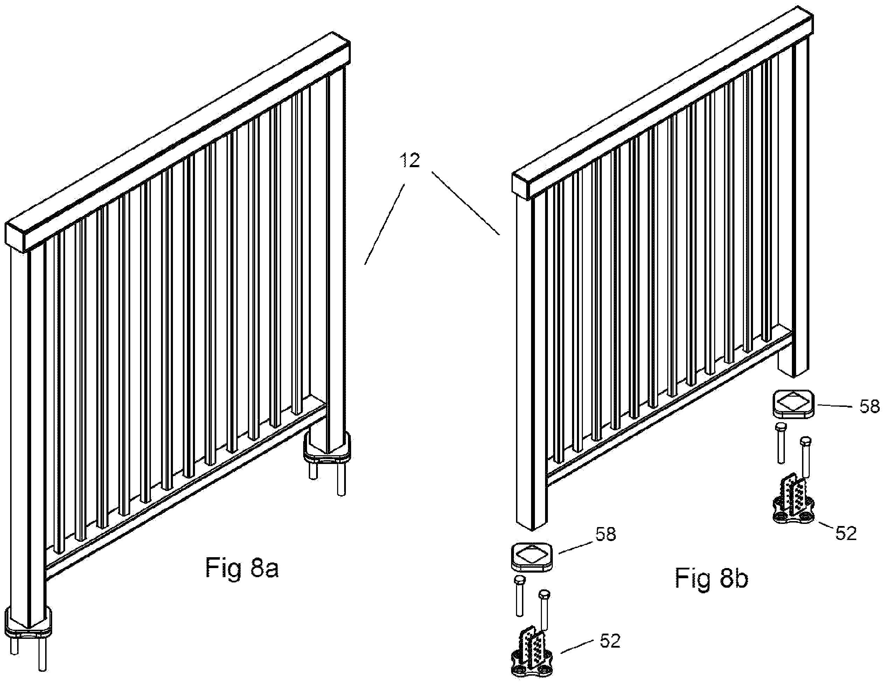

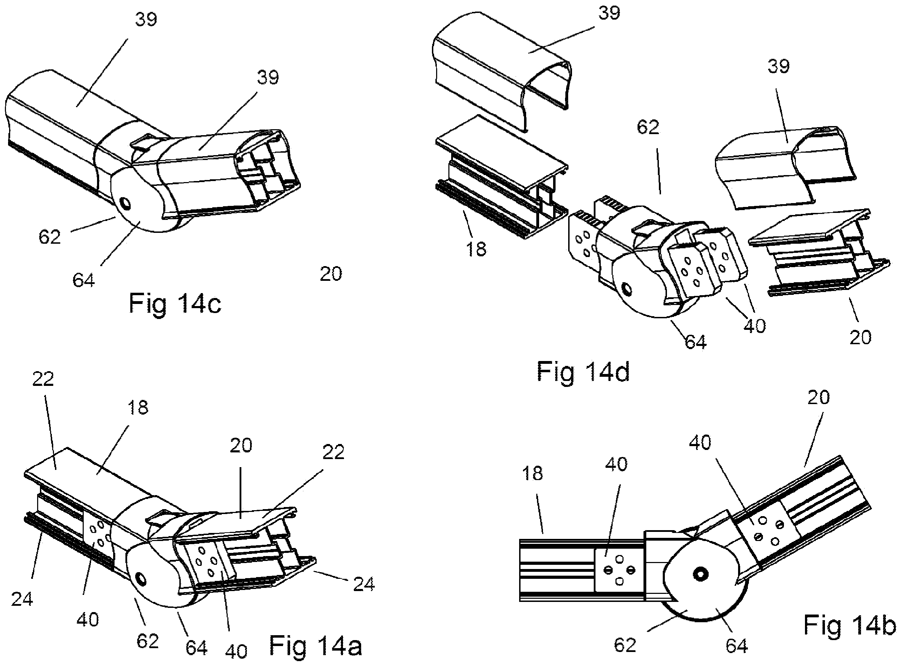

Figure 14 shows a fourth embodiment of a frame connection in accordance with the present invention. The fourth embodiment is similar to the third embodiment in that a connection body 62 is provided to connect the first and second connection members 40. The connection members 40 however are oriented in the same configuration as the embodiment of Figures 1 to 8.

The connection body 62 is provided with a ball joint 64 therein such that the angle between the first ends of the connection members 40 can be adjusted relative to the second ends of the connection members 40. The first and second elongate members 18 and 20 of this embodiment may also be used in a handrail structure in which the angle between the connected rails can be adjusted. Such an arrangement would be suitable for example when the handrail extends upwardly adjacent a staircase.

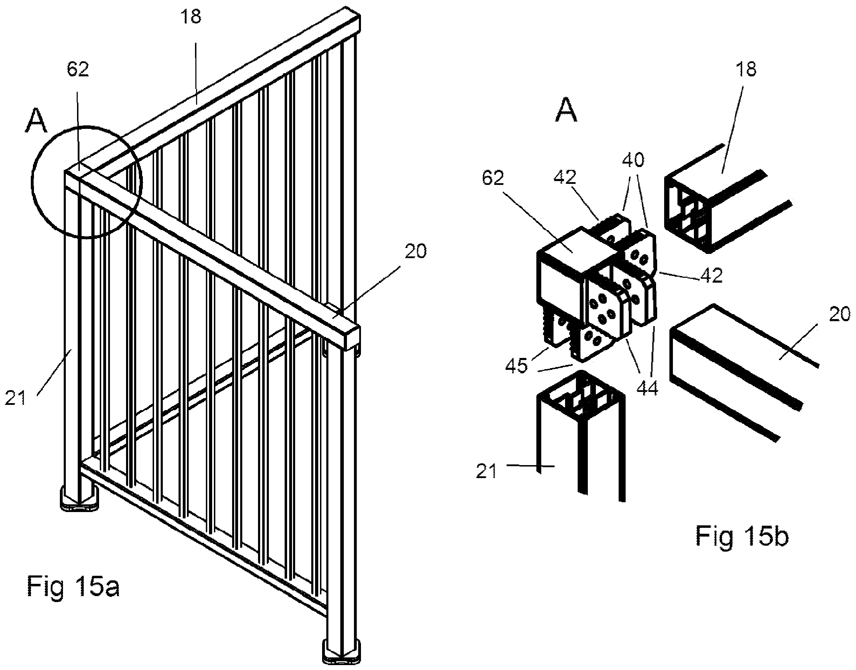

Figure 15 shows a fourth embodiment of a frame connection 10 in accordance with the present invention. The embodiment of Figure 15 is similar to that of the embodiment of Figure 13 and like reference numerals are used to denote like parts.

In the embodiment of Figure 15, the first and second connection members 40 are fixed together and a connection body 62 is provided such that the connection body 62 connects a portion of the first connection member 40 between the first and second ends 42 and 43 thereof to the second connection member 40 between the first and second ends 42 and 43 thereof.

The connection body 62 however is provided with third end portions 45 extending in a direction perpendicular to both the first and second end portions 42 and 44. The first and second end portions 42 and 43 are provided to connect the first elongate member 18 to the second elongate member 20 in the same manner as the second embodiment. The third end portions 45 are provided to connect to a third elongate member 21. The orientation of the third end portions 45 are such that the connection provided by the first and third end portions 42 and 45 is the same as that of the first embodiment. The first, second and third elongate members 18, 20 and 21 are thereby connected all at right angles to create a corner join of the fencing assembly as can be seen in Figure 15a.

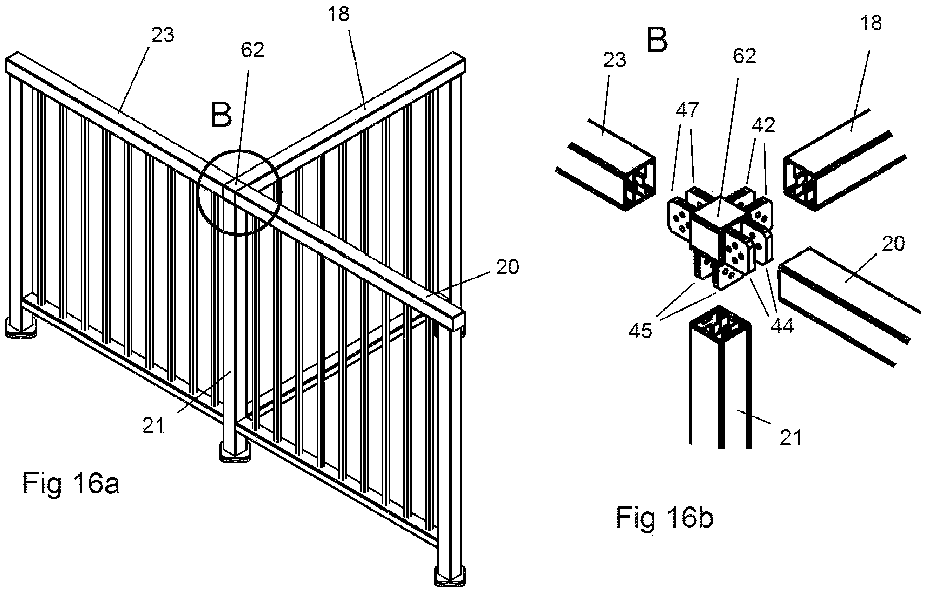

Figure 16 shows a fifth embodiment of a frame connection 10 in accordance with the present invention. The embodiment of Figure 16 is similar to that of the embodiment of Figure 15 and like reference numerals are used to denote like parts.

In the embodiment of Figure 16, the connection body 62 is provided with fourth end portions 45 extending parallel to the second end portions 44 but in an opposite direction. The fourth end portions 45 are provided to connect to a fourth elongate member 23. The orientation of the fourth end portions 45 are such that the connection provided by the first and fourth end portions 42 and 47 is the same as that of the second embodiment. The fourth elongate member 23 extends in a direction away from the second elongate member 20 such that a T-join of the fencing assembly is provided as can be seen in Figure 16a.

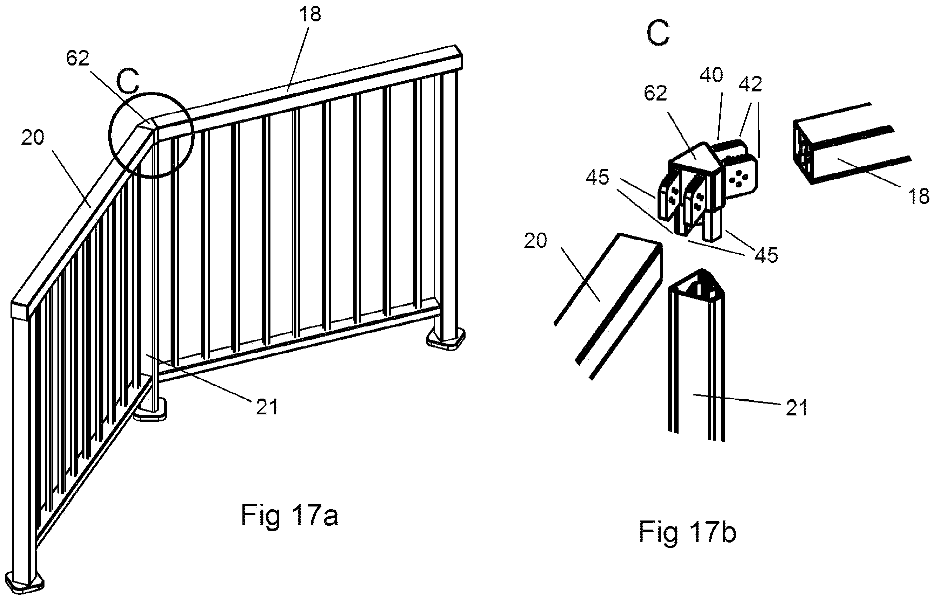

Figure 17 shows a sixth embodiment of a frame connection 10. The embodiment of the frame connection 10 of Figure 17 is similar to that of Figure 15. In this embodiment however, the first and second end portions 42 and 45 are at an obtuse angle to each other. The connection therefore provides a bend connection for the fence assembly as can be seen in Figure 17a.

It will be readily apparent to persons skilled in the relevant arts that various modifications and improvements may be made to the foregoing embodiments, in addition to those already described, without departing from the basic inventive concepts of the present invention as defined by the appended claims.

## Claims

1. A frame connection (10) comprising:
a first elongate member (18) having first and second channels, the first channel (32) being in a first longitudinal side of the first elongate member (18) and the second channel (34) being in an opposed second longitudinal side of the first elongate member (18);
a second elongate member (20) having first and second channels (32, 34), the first channel (32) being in a first longitudinal side of the second elongate member (20) and the second channel (34) being in an opposed second longitudinal side of the second elongate member (20);
a first connection member (40) having a first end portion (42) comprising a first planar member (43) and a second end portion (44) comprising a second planar member (45), each of the first and second end portions (42, 44) including one or more holes (50) therein;
a second connection member (40) having a first end portion (42) comprising a first planar member (43) and a second end portion (44) comprising a second planar member (45), each of the first and second end portions (42, 44) including one or more holes (50) therein; and
side cover members (36);
wherein the first end portions (42) of the first and second connection members (40) are received in the first and second channels (32, 34) respectively of the first elongate member (18), the second end portions (44) of the first and second connection members (40) are received in the first and second channels (32, 34) respectively of the second elongate member (20), fasteners are received through the holes (50) to secure the first and second connection members (40) to the first and second elongate members (18, 20) and the side cover members (36) are then secured across the first and second channels (32, 34) of the first and second elongate members (18, 20),
and **characterized in that**
the first and second elongate members (18, 20) are formed by parallel first and second end walls (22, 24) interconnected by first and second inner walls (26, 28) such that the first channel (32) is defined adjacent a first side of the elongate member (18, 20) between the first inner wall (26) and the first ends of the first and second end walls (23, 24) and the second channel (34) is defined adjacent a second side of the elongate member (18, 20) between the second inner wall (28) and the second ends of the first and second end walls (22, 24).

2. A frame connection (10) in accordance with claim 1, wherein the first and second end portions (42, 44) of the first and second connection members (40) each comprise opposed parallel sides (46) and a distal end (47).

3. A frame connection (10) in accordance with claim 2, wherein the opposed parallel sides (46) of each of the first and second end portions (42, 46) are provided with a plurality of protrusions (48) thereon to engage with the inner sides of the channels such that the connection members are press fit into the channels.

4. A frame connection (10) in accordance with claim 3, wherein the protrusions are constructed of a material to be deformed as the protrusions (48) engage with inner sides of the channels.

5. A frame connection (10) in accordance with claim 4, wherein the protrusions (43) each comprise a triangular shaped protrusion.

6. A frame connection (10) in accordance with claim 1, wherein the first and second channels (32, 34) of the elongate members (18, 20) are of complementary shape to the first and second end portions (42, 44) of the connection members (40) such that in cross section the length of the channels (32, 34) between the first and second end walls (22, 24) is relatively large compared to the width.

7. A frame connection (10) in accordance with claim 6, wherein each of the first and second side walls (22, 24) is provided with longitudinal slots (38) along the edges thereof such that the slots can receive complementary ribs provided on the side cover members (36) to allow the side cover members (36) to be press fit across the channels (32, 34).

8. A frame connection (10) in accordance with any one of claims 2 to 7, wherein the first and second planar members (43, 45) are oriented in the same plane and opposed parallel sides of the first planar member (43) are perpendicular to opposed parallel sides of the second planar member (45).

9. A frame connection (10) in accordance with any one of claims 2 to 7, wherein the first planar member (43) of each connection member (40) is oriented in a plane perpendicular to that of the second planar member (45).

10. A frame connection (10) in accordance with any one of the preceding claims, wherein a connection body (62) is provided such that the connection body (62) connects a portion of the first connection member (40) between the first and second ends thereof to the second connection member (40) between the first and second ends thereof.

11. A frame connection (10) in accordance with claim 10 , wherein the side cover members (36) are connected by a curved top wall such that a single cover unit is provided for covering the first and second channels (32, 34) and extending across the first end wall (22).

12. A frame connection (10) in accordance with claim 11, wherein the connection body (62) is provided with a cross sectional shape the same as that of the cover unit such that a join having a consistent cross section throughout is created.

13. A frame connection (10) in accordance with claim 10, wherein the connection body (62) is provided with a ball joint therein such that the angle between the first ends of the connection members (40) can be adjusted relative to the second ends of the connection members.

14. A frame connection (10) in accordance with claim 10, wherein the connection body (62) is provided with third end portions extending in a direction perpendicular to both the first and second end portions, the third end portions being provided to connect to a third elongate member (21).

## Patentansprüche

1. Rahmenverbindung (10), umfassend:
ein erstes längliches Element (18) mit ersten und zweiten U-Profilen, wobei sich das erste U-Profil (32) in einer ersten Längsseite des ersten länglichen Elements (18) befindet und sich das zweite U-Profil (34) in einer entgegengesetzten zweiten Längsseite des ersten länglichen Elements (18) befindet;
ein zweites längliches Element (20) mit ersten und zweiten U-Profilen (32, 34), wobei sich das erste U-Profil (32) in einer ersten Längsseite des zweiten länglichen Elements (20) befindet und sich das zweite U-Profil (34) in einer entgegengesetzten zweiten Längsseite des zweiten länglichen Elements (20) befindet;
ein erstes Verbindungselement (40) mit einem ersten Endabschnitt (42), der ein erstes ebenflächiges Element (43) und einem zweiten Endabschnitt (44), der ein zweites ebenflächiges Element (45) umfasst, wobei jeder der ersten und zweiten Endabschnitte (42, 44) ein oder mehrere Löcher (50) darin einschließt;
ein zweites Verbindungselement (40) mit einem ersten Endabschnitt (42), der ein erstes ebenflächiges Element (43) und einen zweiten Endabschnitt (44) umfasst, der ein zweites ebenflächiges Element (45) umfasst, wobei jeder der ersten und zweiten Endabschnitte (42, 44) ein oder mehrere Löcher (50) darin einschließt; und
seitliche Abdeckungselemente (36);
wobei die ersten Endabschnitte (42) der ersten und zweiten Verbindungselemente (40) in die ersten bzw. zweiten U-Profile (32, 34) des ersten länglichen Elements (18) aufgenommen werden, die zweiten Endabschnitte (44) der ersten und zweiten Verbindungselemente (40) in die ersten bzw. zweiten U-Profile (32, 34) des zweiten länglichen Elements (20) aufgenommen werden, wobei die Befestigungselemente durch die Löcher (50) aufgenommen werden, um die ersten und zweiten Verbindungselemente (40) an den ersten und zweiten länglichen Elementen (18, 20) zu befestigen und die seitlichen Abdeckungselemente (36) werden danach über die ersten und zweiten U-Profile (32, 34) der ersten und zweiten länglichen Elemente (18, 20) befestigt, und **dadurch gekennzeichnet, dass** die ersten und zweiten länglichen Elemente (18, 20) durch parallele erste und zweite Endwände (22, 24) gebildet sind, die durch erste und zweite Innenwände (26, 28) derart verbunden sind, dass das erste U-Profil (32) angrenzend an eine erste Seite des länglichen Elements (18, 20) zwischen der ersten Innenwand (26) und den ersten Enden der ersten und zweiten Endwände (23, 24) definiert ist und das zweite U-Profil (34) angrenzend an eine zweite Seite des länglichen Elements (18, 20) zwischen der zweiten Innenwand (28) und den zweiten Enden der ersten und zweiten Endwände (22, 24) definiert ist.

2. Rahmenverbindung (10) in Übereinstimmung mit Anspruch 1, wobei die ersten und zweiten Endabschnitte (42, 44) der ersten und zweiten Verbindungselemente (40) jeweils entgegengesetzte parallele Seiten (46) und ein distales Ende (47) umfassen.

3. Rahmenverbindung (10) in Übereinstimmung mit Anspruch 2, wobei die entgegengesetzten parallelen Seiten (46) jedes der ersten und zweiten Endabschnitte (42, 46) mit einer Vielzahl von Vorsprüngen (48) daran versehen sind, um mit den Innenseiten der U-Profile derart zu rasten, dass die Verbindungselemente mittels Presspassung in die U-Profile eingesetzt werden.

4. Rahmenverbindung (10) in Übereinstimmung mit Anspruch 3, wobei die Vorsprünge aus einem zu verformenden Material konstruiert sind, um verformt zu werden, sowie die Vorsprünge (48) mit Innenseiten der U-Profile rasten.

5. Rahmenverbindung (10) in Übereinstimmung, mit Anspruch 4, wobei die Vorsprünge (43) jeweils einen Überstand dreieckiger Form umfassen.

6. Rahmenverbindung (10) in Übereinstimmung mit Anspruch 1, wobei die ersten und zweiten U-Profile (32, 34) der länglichen Elemente (18, 20) komplementärer Form zu den ersten und zweiten Endabschnitten (42, 44) der Verbindungselemente (40) derart sind, dass im Querschnitt die Länge der U-Profile (32, 34) zwischen den ersten und zweiten Endwänden (22, 24) im Vergleich zur Breite relativ groß ist.

7. Rahmenverbindung (10) in Übereinstimmung mit Anspruch 6, wobei jede der ersten und zweiten Seitenwände (22, 24) mit Längsschlitzen (38) entlang deren Rändern versehen ist, derart, dass die Schlitze komplementäre Rippen aufnehmen können, die an den seitlichen Abdeckungselementen (36) bereitgestellt sind, um das Anbringen der Abdeckungselemente (36) mittels Presspassung über die U-Profile (32, 34) zu ermöglichen.

8. Rahmenverbindung (10) in Übereinstimmung mit einem der Ansprüche 2 bis 7, wobei die ersten und zweiten ebenflächigen Elemente (43, 45) in der gleichen Ebene orientiert sind und entgegengesetzte Seiten des ersten ebenflächigen Elements (43) senkrecht zu entgegengesetzten parallelen Seiten des zweiten ebenflächigen Elements (45) sind.

9. Rahmenverbindung (10) in Übereinstimmung mit einem der Ansprüche 2 bis 7, wobei das erste ebenflächige Element (43) jedes Verbindungselements (40) in einer Ebene senkrecht zu jener des zweiten ebenflächigen Elements (45) orientiert ist.

10. Rahmenverbindung (10) in Übereinstimmung mit einem der vorhergehenden Ansprüche, wobei ein Verbindungskörper (62) derart bereitgestellt ist, dass der Verbindungskörper (62) einen Abschnitt des ersten Verbindungselements (40) zwischen den ersten und zweiten Enden davon mit dem zweiten Verbindungselement (40) zwischen den ersten und zweiten Enden davon verbindet.

11. Rahmenverbindung (10) in Übereinstimmung mit Anspruch 10, wobei die seitlichen Abdeckungselemente (36) durch eine gekrümmte obere Wand verbunden sind, derart, dass eine einzige Abdeckungseinheit zum Abdecken der ersten und zweiten U-Profile (32, 34) bereitgestellt ist und sich über die erste Endwand (22) erstreckt.

12. Rahmenverbindung (10) in Übereinstimmung mit Anspruch 11, wobei der Verbindungskörper (62) mit einer gleichen Querschnittsform wie die der Abdeckungseinheit versehen ist, derart, dass eine Verbindung geschaffen wird, die durchweg einen konsistenten Querschnitt aufweist.

13. Rahmenverbindung (10) in Übereinstimmung mit Anspruch 10, wobei der Verbindungskörper (62) mit einer Kugelverbindung darin bereitgestellt ist, derart, dass der Winkel zwischen den ersten Enden der Verbindungselemente (40) relativ zu den zweiten Enden der Verbindungselemente eingestellt werden kann.

14. Rahmenverbindung (10) in Übereinstimmung mit Anspruch 10, wobei der Verbindungskörper (62) mit dritten Endabschnitten versehen ist, die sich in eine Richtung senkrecht zu sowohl den ersten als auch den zweiten Endabschnitten erstrecken, wobei die dritten Endabschnitte bereitgestellt sind, sich mit einem dritten länglichen Element (21) zu verbinden.

## Revendications

1. Un joint de cadre (10) comprenant :
un premier élément allongé (18) doté d'un premier et d'un deuxième canal (32, 34), le premier canal (32) étant dans un premier côté longitudinal du premier élément allongé (18) et le deuxième canal (34) étant dans un deuxième côté longitudinal opposé du premier élément allongé (18) ;
un deuxième élément allongé (20) doté d'un premier et d'un deuxième canal (32, 34), le premier canal (32) étant dans un premier côté longitudinal du deuxième élément allongé (20) et le deuxième canal (34) étant dans un deuxième côté longitudinal opposé du deuxième élément allongé (20) ;
un premier élément formant joint (40) étant doté d'une première portion d'extrémité (42) comprenant un premier élément planaire (43) et une deuxième portion d'extrémité (44) comprenant un deuxième élément planaire (45), chacune de la première et la deuxième portion d'extrémité (42, 44) incluant un ou plusieurs trous (50) à l'intérieur ;
un deuxième élément formant joint (40) étant doté d'une première portion d'extrémité (42) comprenant un premier élément planaire (43) et une deuxième portion d'extrémité (44) comprenant un deuxième élément planaire (45), chacune de la première et la deuxième portion d'extrémité (42, 44) incluant un ou plusieurs trous (50) à l'intérieur ; et
des éléments de couverture latéraux (36) ;
les premières portions d'extrémité (42) du premier et du deuxième élément formant joint (40) étant reçues dans le premier et le deuxième canal (32, 34) respectivement du premier élément allongé (18), les deuxièmes portions d'extrémité (44) du premier et du deuxième élément formant joint (40) étant reçues dans le premier et le deuxième canal (32, 34) respectivement du deuxième élément allongé (20), des attaches étant reçues à travers les trous (50) pour fixer le premier et le deuxième élément formant joint (40) au premier et au deuxième élément allongé (18, 20) et les éléments de couverture latéraux (36) étant ensuite fixés en travers du premier et du deuxième canal (32, 34) du premier et du deuxième élément allongé (18, 20),
et **caractérisé par le fait que** le premier et le deuxième élément allongé (18, 20) sont formés par des parois de première et deuxième extrémité parallèles (22, 24) interconnectées par une première et une deuxième paroi intérieure (26, 28) de manière à ce que le premier canal (32) soit défini en position adjacente à un premier côté de l'élément allongé (18, 20) entre la première paroi intérieure (26) et les premières extrémités de la première et la deuxième paroi d'extrémité (23, 24) et à ce que le deuxième canal (34) soit défini en position adjacente à un deuxième côté de l'élément allongé (18, 20) entre la deuxième paroi intérieure (28) et les deuxièmes extrémités de la première et la deuxième paroi d'extrémité (22, 24).

2. Un joint de cadre (10) selon la revendication 1, dans lequel la première et la deuxième portion d'extrémité (42, 44) du premier et du deuxième élément formant joint (40) comprennent chacune des côtés parallèles opposés (46) et une extrémité distale (47).

3. Un joint de cadre (10) selon la revendication 2, dans lequel les côtés parallèles opposés (46) de chacune de la première et la deuxième portion d'extrémité (42, 46) sont dotés d'une pluralité de protubérances (48) sur celles-ci pour se mettre en prise avec les côtés intérieurs des canaux de manière à ce que les éléments formant joint soient ajustés par pression dans les canaux.

4. Un joint de cadre (10) selon la revendication 3, dans lequel les protubérances sont fabriquées dans une matière allant être déformée lorsque les protubérances (48) se mettent en prise avec les côtés intérieurs des canaux.

5. Un joint de cadre (10) selon la revendication 4, dans lequel les protubérances (43) comprennent chacune une protubérance de forme triangulaire.

6. Un joint de cadre (10) selon la revendication 1, dans lequel le premier et le deuxième canal (32, 34) des éléments allongés (18, 20) sont de forme complémentaire à la première et la deuxième portion d'extrémité (42, 44) des éléments formant joint (40) de manière à ce qu'en section transversale la longueur des canaux (32, 34) entre la première et la deuxième paroi d'extrémité (22, 24) soit relativement grande comparativement à la largeur.

7. Un joint de cadre (10) selon la revendication 6, dans lequel chacune de la première et la deuxième paroi latérale (22, 24) est dotée de fentes longitudinales (38) le long de ses bords de manière à ce que les fentes puissent recevoir des nervures complémentaires prévues sur les éléments de couverture latéraux (36) pour permettre aux éléments de couverture latéraux (36) d'être ajustés par pression en travers des canaux (32, 34).

8. Un joint de cadre (10) selon une quelconque des revendications 2 à 7, dans lequel le premier et le deuxième élément planaire (43, 45) sont orientés dans le même plan et des côtés parallèles opposés du premier élément planaire (43) sont perpendiculaires à des côtés parallèles opposés du deuxième élément planaire (45).

9. Un joint de cadre (10) selon une quelconque des revendications 2 à 7, dans lequel le premier élément planaire (43) de chaque élément formant joint (40) est orienté dans un plan perpendiculaire à celui du deuxième élément planaire (45).

10. Un joint de cadre (10) selon une quelconque des revendications précédentes, dans lequel un corps de connexion (62) est prévu de manière à ce que le corps de connexion (62) connecte une portion du premier élément formant joint (40) entre sa première et sa deuxième extrémité au deuxième élément formant joint (40) entre sa première et sa deuxième extrémité.

11. Un joint de cadre (10) selon la revendication 10, dans lequel les éléments de couverture latéraux (36) sont connectés par une paroi supérieure recourbée de manière à ce qu'un seul élément de couverture latéral soit prévu pour couvrir le premier et le deuxième canal (32, 34) et s'étendre en travers de la première paroi d'extrémité (22).

12. Un joint de cadre (10) selon la revendication 11, dans lequel le corps de connexion (62) est doté d'une forme en coupe transversale la même que celle de l'unité de couverture de manière à ce qu'un raccord doté d'une coupe transversale uniforme partout soit créé.

13. Un joint de cadre (10) selon la revendication 10, dans lequel le corps de connexion (62) est doté d'un joint à rotule à l'intérieur de manière à ce que l'angle entre les premières extrémités des éléments formant joint (40) puisse être ajusté relativement aux deuxièmes extrémités des éléments formant joint.

14. Un joint de cadre (10) selon la revendication 10, dans lequel le corps de connexion (62) est doté de troisièmes portions d'extrémité s'étendant dans une direction perpendiculaire à la fois à la première et à la deuxième portion d'extrémité, les troisièmes portions d'extrémité étant prévues pour se connecter à un troisième élément allongé (21).
